# EUROPEAN PATENT APPLICATION

(11) **EP 4 704 230 A1**
(43) Date of publication of application: **04.03.2026**
(21) Application number: 25161580.3
(22) Date of filing: 04.03.2025
(51) Int. Cl.: H01M 50/164, H01M 50/176, H01M 50/184, H01M 50/188, H01M 50/198, H01M 50/358, H01M 50/557

(54) **SECONDARY BATTERY AND BATTERY PACK INCLUDING THE SAME**

(30) Priority: 28.08.2024 KR 20240116108
(71) Applicant: SAMSUNG SDI CO., LTD., Yongin-si, Gyeonggi-do 17084 (KR)
(72) Inventor: BAE, Kwang Soo, Suwon-si, Gyeonggi-do 16678 (KR); YONG, Jun Sun, Suwon-si, Gyeonggi-do 16678 (KR); LEE, Jun Hyung, Suwon-si, Gyeonggi-do 16678 (KR)
(74) Representative: Gulde & Partner

(57) **Abstract**

A secondary battery and a battery pack are disclosed. A secondary battery includes a case, an electrode assembly accommodated in the case, a cap plate including a first surface facing the electrode assembly and a second surface opposite the first surface, a terminal protruding outward from the cap plate and connected to the electrode assembly, and a gasket between the cap plate and the terminal and including a first end portion in contact with the cap plate and a second end portion in contact with the terminal, and a creepage distance of the gasket is greater than a distance between the first end portion and the second end portion.

## Description

### BACKGROUND

### 1. Field

Aspects of embodiments of the present disclosure relate to a secondary battery and a battery pack including the same.

### 2. Description of the Related Art

In general, due to the recent proliferation of electronic devices using batteries, such as mobile phones, notebook computers, and electric vehicles, the demand for secondary batteries having high energy density and high capacity has rapidly increased. Accordingly, research and development for improving the performance of a lithium secondary battery are being actively conducted.

A lithium secondary battery is a battery including a positive electrode and a negative electrode including an active material capable of intercalating and deintercalating lithium ions, and an electrolyte solution, and generates energy through oxidation/reduction reactions when lithium ions are intercalated/deintercalated at the positive and negative electrodes.

The above-described information disclosed in the technology that forms the background of the present disclosure is provided to improve understanding of the background of the present disclosure, and thus may include information that does not constitute the related art.

### SUMMARY

According to an aspect of one or more embodiments of the present disclosure, a secondary battery and a battery pack with improved insulation performance are provided.

The above and other aspects and features of the present disclosure will be described in or will be apparent from the following description of some embodiments of the present disclosure.

According to one or more embodiments of the present disclosure, a secondary battery includes a case, an electrode assembly accommodated in the case, a cap plate including a first surface facing the electrode assembly and a second surface opposite the first surface, a terminal protruding outward from the cap plate and connected to the electrode assembly, and a gasket between the cap plate and the terminal and including a first end portion in contact with the cap plate and a second end portion in contact with the terminal, wherein a creepage distance of the gasket is greater than a distance between the first end portion and the second end portion.

The gasket may include a first insulating surface extending toward the terminal from the first end portion, a second insulating surface extending toward the cap plate from the second end portion and spaced apart from the first insulating surface, and a third insulating surface between the first insulating surface and the second insulating surface.

The first insulating surface and the second insulating surface may be parallel to the second surface.

The first insulating surface and the second insulating surface may be on different planes.

The second insulating surface may be higher than the first insulating surface.

The first insulating surface and the second surface may be on a same plane.

The third insulating surface may intersect with the second surface.

The creepage distance of the gasket may be a sum of a creepage distance of the first insulating surface, a creepage distance of the second insulating surface, and a creepage distance of the third insulating surface.

The creepage distance of the gasket may be greater than or equal to 6 mm and less than or equal to 10 mm.

The creepage distance of the second insulating surface may be less than the creepage distance of the first insulating surface.

The creepage distance of the second insulating surface may be greater than or equal to 1 mm and less than or equal to 4 mm.

The creepage distance of the third insulating surface may be greater than or equal to 1 mm and less than or equal to 3 mm.

The gasket may further include a support surface spaced apart from the first insulating surface and facing the electrode assembly.

A cross-sectional area of the gasket may increase from the support surface toward the first insulating surface.

The secondary battery may further include a rib protruding from the cap plate and configured to support the support surface.

The gasket may further include a fixing portion extending from the support surface and arranged to surround the rib.

The gasket may further include a groove that is concave from at least one of the first insulating surface, the second insulating surface, and the third insulating surface.

The gasket may further include a filler protruding from at least one of the first insulating surface, the second insulating surface, and the third insulating surface.

The terminal may include a first terminal surface facing the electrode assembly and a second terminal surface opposite to the first terminal surface, and an end portion of the filler may be lower than the second terminal surface.

According to one or more embodiments of the present disclosure, a battery pack includes a housing, and a plurality of secondary batteries accommodated in the housing, wherein each of the secondary batteries includes a case, an electrode assembly accommodated in the case, a cap plate including a first surface facing the electrode assembly and a second surface opposite the first surface, a terminal passing through the cap plate and connected to the electrode assembly, and a gasket between the cap plate and the terminal and including a first end portion in contact with the cap plate and a second end portion in contact with the terminal, wherein a creepage distance of the gasket is greater than a separation distance between the first end portion and the second end portion.

### BRIEF DESCRIPTION OF THE DRAWINGS

The drawings attached to this specification illustrate some example embodiments of the present disclosure, and further describe aspects and features of the present disclosure together with the detailed description of the present disclosure. However, the present disclosure is not to be construed as being limited to the drawings.
FIG. 1 is a perspective view schematically illustrating a configuration of a battery pack according to an embodiment of the present disclosure;
FIG. 2 is a perspective view schematically illustrating a configuration of a secondary battery according to an embodiment of the present disclosure;
FIG. 3 is an exploded perspective view schematically illustrating a configuration of the secondary battery according to an embodiment of the present disclosure;
FIG. 4 is a view schematically illustrating a configuration of an electrode assembly according to an embodiment of the present disclosure;
FIG. 5 is a perspective view schematically illustrating a configuration of a terminal and a gasket according to an embodiment of the present disclosure;
FIG. 6 is a cross-sectional view schematically illustrating a configuration of the terminal and the gasket according to an embodiment of the present disclosure;
FIG. 7 is an enlarged cross-sectional view schematically illustrating a configuration of the gasket according to an embodiment of the present disclosure;
FIG. 8 is a perspective view schematically illustrating a configuration of a gasket according to another embodiment of the present disclosure;
FIG. 9 is a cross-sectional view schematically illustrating a configuration of the gasket of FIG. 8;
FIG. 10 is an enlarged cross-sectional view schematically illustrating a configuration of a groove of the gasket of FIG. 8;
FIG. 11 is a perspective view schematically illustrating a configuration of a gasket according to another embodiment of the present disclosure;
FIG. 12 is a cross-sectional view schematically illustrating a configuration of the gasket of FIG. 11; and
FIG. 13 is an enlarged cross-sectional view schematically illustrating a configuration of a filler of the gasket of FIG. 11.

### DETAILED DESCRIPTION

Herein, some embodiments of the present disclosure will be described in further detail, with reference to the accompanying drawings. The terms or words used in this specification and claims are not to be construed as being limited to the usual or dictionary meaning and are to be interpreted as having meaning and concept consistent with the technical idea of the present disclosure based on the principle that the inventor can be his/her own lexicographer to appropriately define the concept of the term.

The embodiments described in this specification and the configurations shown in the drawings are provided as some example embodiments of the present disclosure and do not necessarily represent all of the technical ideas, aspects, and features of the present disclosure. Accordingly, it is to be understood that there may be various equivalents and modifications that may replace or modify the embodiments described herein at the time of filing this application.

It is to be understood that when an element or layer is referred to as being "on," "connected to," or "coupled to" another element or layer, it may be directly on, connected, or coupled to the other element or layer, or one or more intervening elements or layers may also be present. When an element or layer is referred to as being "directly on," "directly connected to," or "directly coupled to" another element or layer, there are no intervening elements or layers present. For example, when a first element is described as being "coupled" or "connected" to a second element, the first element may be directly coupled or connected to the second element or the first element may be indirectly coupled or connected to the second element via one or more intervening elements.

In the figures, dimensions of the various elements, layers, etc. may be exaggerated for clarity of illustration. The same reference numerals designate the same or like elements. As used herein, the term "and/or" includes any and all combinations of one or more of the associated listed items. Further, the use of "may" when describing embodiments of the present disclosure relates to "one or more embodiments of the present disclosure." Expressions, such as "at least one of" and "any one of," when preceding a list of elements, modify the entire list of elements and do not modify the individual elements of the list. When phrases such as "at least one of A, B, and C," "at least one of A, B, or C," "at least one selected from a group of A, B, and C," or "at least one selected from among A, B, and C" are used to designate a list of elements A, B, and C, the phrase may refer to any and all suitable combinations or a subset of A, B, and C, such as A, B, C, A and B, A and C, B and C, or A and B and C. As used herein, the terms "use," "using," and "used" may be considered synonymous with the terms "utilize," "utilizing," and "utilized," respectively. As used herein, the terms "substantially," "about," and similar terms are used as terms of approximation and not as terms of degree, and are intended to account for the inherent variations in measured or calculated values that would be recognized by those of ordinary skill in the art.

It is to be understood that, although the terms "first," "second," "third," etc. may be used herein to describe various elements, components, regions, layers, and/or sections, these elements, components, regions, layers, and/or sections are not to be limited by these terms. These terms are used to distinguish one element, component, region, layer, or section from another element, component, region, layer, or section. Thus, a first element, component, region, layer, or section discussed below could be termed a second element, component, region, layer, or section without departing from the teachings of example embodiments.

Spatially relative terms, such as "beneath," "below," "lower," "above," "upper," and the like, may be used herein for ease of description to describe one element or feature's relationship to another element(s) or feature(s) as illustrated in the figures. It is to be understood that the spatially relative terms are intended to encompass different orientations of the device in use or operation in addition to the orientation depicted in the figures. For example, if the device in the figures is turned over, elements described as "below" or "beneath" other elements or features would then be oriented "above" or "over" the other elements or features. Thus, the term "below" may encompass both an orientation of above and below. The device may be otherwise oriented (e.g., rotated 90 degrees or at other orientations), and the spatially relative descriptors used herein should be interpreted accordingly.

The terminology used herein is for the purpose of describing embodiments of the present disclosure and is not intended to be limiting of the present disclosure. As used herein, the singular forms "a" and "an" are intended to include the plural forms as well, unless the context clearly indicates otherwise. It is to be further understood that the terms "includes," "including," "comprises," and/or "comprising," when used in this specification, specify the presence of stated features, integers, steps, operations, elements, and/or components but do not preclude the presence or addition of one or more other features, integers, steps, operations, elements, components, and/or groups thereof.

Also, any numerical range disclosed and/or recited herein is intended to include all sub-ranges of the same numerical precision subsumed within the recited range. For example, a range of "1.0 to 10.0" is intended to include all sub-ranges between (and including) the recited minimum value of 1.0 and the recited maximum value of 10.0, that is, having a minimum value equal to or greater than 1.0 and a maximum value equal to or less than 10.0, such as, for example, 2.4 to 7.6. Any maximum numerical limitation recited herein is intended to include all lower numerical limitations subsumed therein, and any minimum numerical limitation recited in this specification is intended to include all higher numerical limitations subsumed therein. Accordingly, Applicant reserves the right to amend this specification, including the claims, to expressly recite any sub-range subsumed within the ranges expressly recited herein.

References to two compared elements, features, etc. as being "the same" may mean that they are the same or substantially the same. Thus, the phrase "the same" or "substantially the same" may include a case having a deviation that is considered low in the art, for example, a deviation of 5% or less. In addition, when a certain parameter is referred to as being uniform in a given region, it may mean that it is uniform in terms of an average.

Throughout the specification, unless otherwise stated, each element may be singular or plural.

When an arbitrary element is referred to as being arranged (or located or positioned) on the "above (or below)" or "on (or under)" a component, it may mean that the arbitrary element is placed in contact with the upper (or lower) surface of the component and may also mean that another component may be interposed between the component and any arbitrary element arranged (or located or positioned) on (or under) the component.

In addition, it is to be understood that when an element is referred to as being "coupled," "linked," or "connected" to another element, the elements may be directly "coupled," "linked," or "connected" to each other, or one or more intervening elements may be present therebetween, through which the element may be "coupled," "linked," or "connected" to another element. In addition, when a part is referred to as being "electrically coupled" to another part, the part may be directly electrically connected to another part, or one or more intervening parts may be present therebetween such that the part and the another part are indirectly electrically connected to each other.

Throughout the specification, when "A and/or B" is stated, it means A, B, or A and B, unless otherwise stated. That is, "and/or" includes any or all combinations of a plurality of items enumerated. When "C to D" is stated, it means C or more and D or less, unless otherwise specified.

The terms used in the present specification are for describing embodiments of the present disclosure and are not intended to limit the present disclosure.

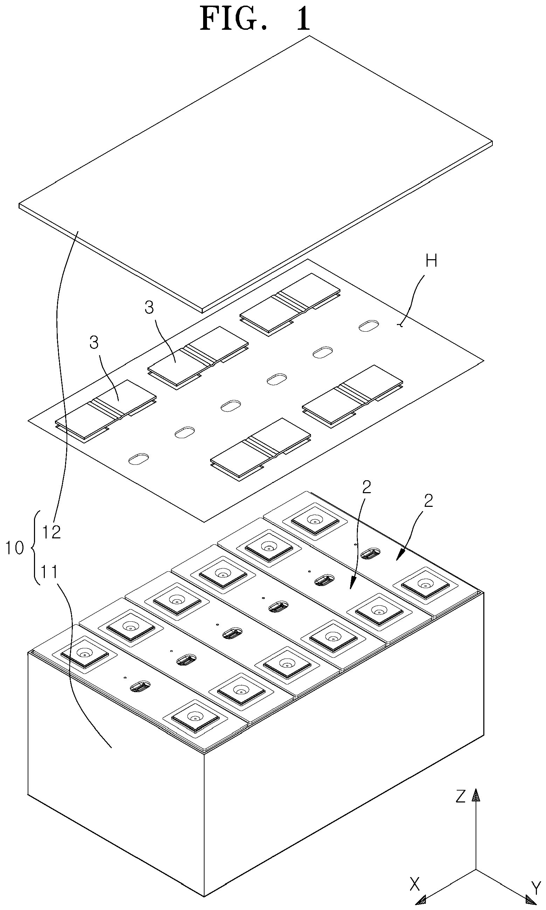

FIG. 1 is a perspective view schematically illustrating a configuration of a battery pack according to an embodiment of the present disclosure.

Referring to FIG. 1, a battery pack according to the present embodiment may include a housing 10 and a secondary battery 2.

The housing 10 generally forms an exterior of the battery pack, and may provide a space in which the secondary battery 2 may be accommodated.

The housing 10 according to the present embodiment may include a housing body 11 and a cover 12.

The housing body 11 may be formed to have a box shape, with an empty interior and an open side. However, a cross-sectional shape of the housing body 11 is not limited to a quadrangular shape, as shown in FIG. 1, and may be varied in design to have any of various shapes, such as a polygonal shape, a circular shape, and an oval shape.

The cover 12 may be coupled to the housing body 11 and may close an internal space of the housing body 11. As an example, the cover 12 may be formed to have a substantially plate shape and may be disposed to face the open side of the housing body 11. The cover 12 may be fixed to the housing body 11 by any of various types of coupling methods, such as bolting, latching, welding, fitting coupling, and the like.

The secondary battery 2 may function as a unit structure, which stores and supplies power, in the battery pack. The secondary battery 2 may be disposed, or accommodated, inside the housing 10.

A plurality of secondary batteries 2 may be provided. The plurality of secondary batteries 2 may be arranged in two or more rows in at least one direction of a length direction (an X-axis direction based on FIG. 1) or a width direction (a Y-axis direction based on FIG. 1) of the housing 10. In FIG. 1, a case in which the plurality of secondary batteries 2 are arranged in six rows in the length direction of the housing 10 is illustrated as an example, but an arrangement form of the plurality of secondary batteries 2 is not limited thereto, and may be varied in design. The plurality of secondary batteries 2 may be disposed side by side. A number of the secondary batteries 2 may be varied in design depending on a size, shape, or the like of the housing 10.

The plurality of secondary batteries 2 may be electrically connected by bus bars 3.

The bus bars 3 according to the present embodiment may be disposed between the cover 12 and the secondary batteries 2. A plurality of bus bars 3 may be provided. Each of the bus bars 3 may connect a pair of adjacent secondary batteries 2 in series or parallel.

The bus bar 3 may be formed of an electrically conductive material such as copper, aluminum, nickel, or the like. However, a specific shape of the bus bar 3 is not limited to that shown in FIG. 1, and may be varied in design so as to electrically connect the adjacent secondary batteries 2.

The plurality of bus bars 3 may be supported inside the housing 10 by a bus bar holder H.

The bus bar holder H according to the present embodiment may be formed to have a shape of a flat plate. The bus bar holder H may be disposed between the cover 12 and the secondary batteries 2. The bus bars 3 may be fixed to the bus bar holder H by any of various types of coupling methods, such as fitting coupling, bolting, latching, injection coupling, and the like. In an embodiment, the bus bar holder H may include a polymer compound material that is electrically insulative.

Herein, the secondary battery 2 according to various embodiments of the present disclosure will be described.

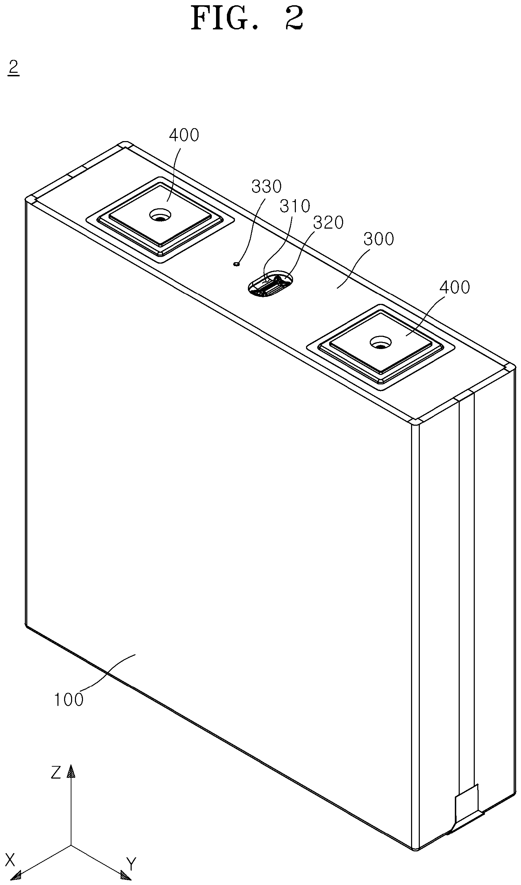

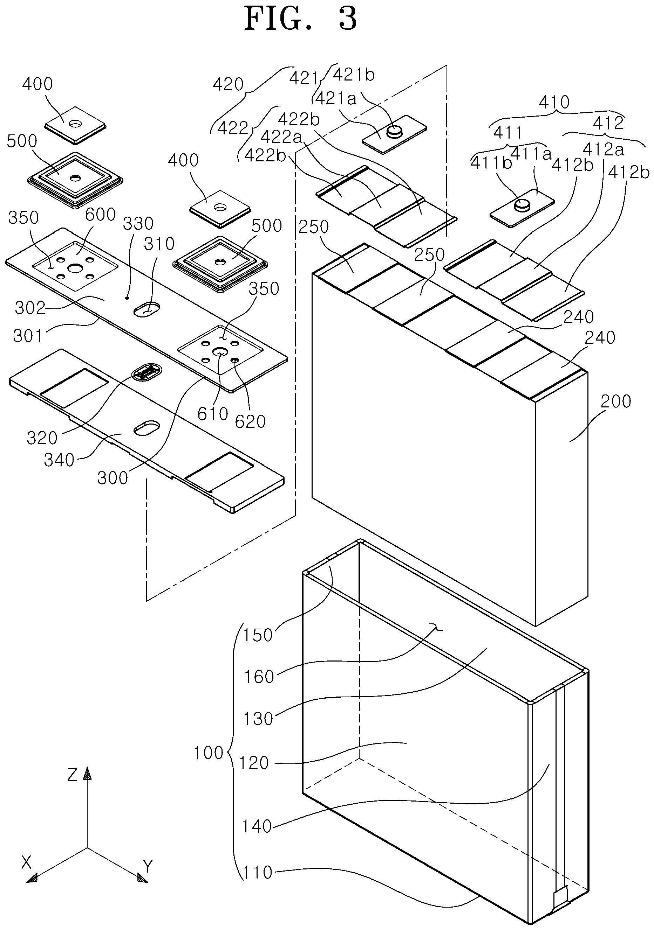

FIG. 2 is a perspective view schematically illustrating a configuration of the secondary battery according to an embodiment of the present disclosure; and FIG. 3 is an exploded perspective view schematically illustrating a configuration of the secondary battery according to an embodiment of the present disclosure.

Herein, a case in which the secondary battery 2 is a lithium-ion secondary battery having a prismatic shape will be described as an example. However, the present disclosure is not limited thereto, and the secondary battery 2 may be a lithium-polymer battery or a cylindrical battery, for example.

Referring to FIGS. 2 and 3, the secondary battery 2 according to the present embodiment includes a case 100, an electrode assembly 200, a cap plate 300, terminals 400, and a gasket 500.

The case 100 generally forms an exterior of the secondary battery 2 and may accommodate the electrode assembly 200.

The case 100 according to the present embodiment may include a bottom portion 110, a front surface portion 120, a rear surface portion 130, a first side surface portion 140, and a second side surface portion 150.

The bottom portion 110 may form a lower side of the exterior of the case 100 (based on FIG. 3). The bottom portion 110 according to an embodiment may have a rectangular plate shape, for example. The bottom portion 110 may be seated on a bottom surface of the housing body 11.

The front surface portion 120, the rear surface portion 130, the first side surface portion 140, and the second side surface portion 150 may form a perimeter exterior of the case 100.

The front surface portion 120, the rear surface portion 130, the first side surface portion 140, and the second side surface portion 150 according to the present embodiment may have a form of plates extending upward (based on FIG. 3) from edges of the bottom portion 110. The front surface portion 120, the rear surface portion 130, the first side surface portion 140, and the second side surface portion 150 may be disposed to surround an upper space of the bottom portion 110. In an embodiment, the front surface portion 120, the rear surface portion 130, the first side surface portion 140, and the second side surface portion 150 may be disposed to form a rectangular cross-sectional shape.

The front surface portion 120 and the rear surface portion 130 may be disposed to face each other in the length direction of the housing 10. In an embodiment, the front surface portion 120 and the rear surface portion 130 may be disposed parallel to each other. The front surface portion 120 and the rear surface portion 130 may have a same area.

The first side surface portion 140 and the second side surface portion 150 may be disposed to face each other in the width direction of the housing 10. In an embodiment, the first side surface portion 140 and the second side surface portion 150 may be disposed parallel to each other. The first side surface portion 140 and the second side surface portion 150 may have a same area. The first side surface portion 140 and the second side surface portion 150 may each have a smaller area than an area of each of the front surface portion 120 and the rear surface portion 130.

The case 100 may further include an opening 160. The opening 160 according to the present embodiment may refer to a space enclosed by upper end portions of the front surface portion 120, the rear surface portion 130, the first side surface portion 140, and the second side surface portion 150. The opening 160 may interconnect internal and external spaces of the case 100.

Accordingly, the case 100 according to an embodiment may have a rectangular parallelepiped shape with an open upper side.

As described herein, a first direction may refer to a direction that is parallel to a Z-axis based on FIGS. 2 and 3 and extends from the bottom portion 110 toward the opening 160. A second direction may refer to a direction that is parallel to a Y-axis based on FIGS. 2 and 3 and extends from the first side surface portion 140 toward the second side surface portion 150. A third direction may refer to a direction that is parallel to an X-axis based on FIGS. 2 and 3 and extends from the front surface portion 120 toward the rear surface portion 130.

The electrode assembly 200 may function as a unit structure for performing a power charging and discharging operation in the secondary battery 2. The electrode assembly 200 may be accommodated inside the case 100.

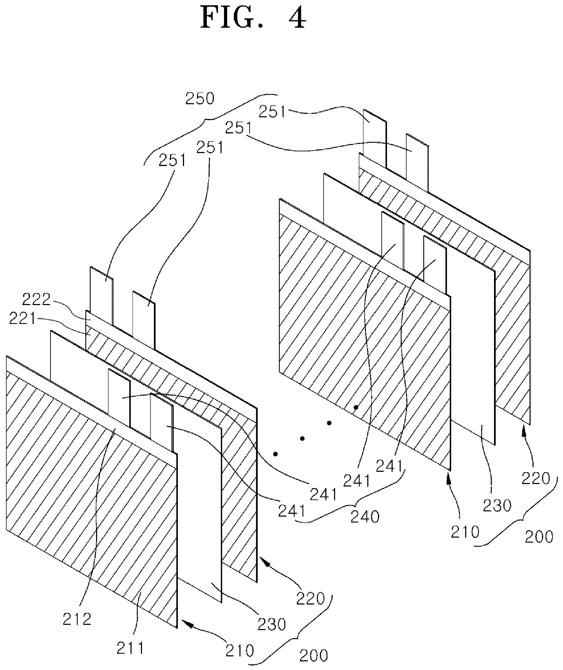

FIG. 4 is a view schematically illustrating a configuration of the electrode assembly according to one embodiment of the present disclosure.

Referring to FIGS. 2 to 4, the electrode assembly 200 according to the present embodiment may include a first electrode 210, a second electrode 220, and a separator 230 disposed between the first electrode 210 and the second electrode 220. In an embodiment, the first electrode 210, the separator 230, and the second electrode 220 may each be provided in plural.

Herein, a case in which the electrode assembly 200 has a stack form in which the plurality of first electrodes 210, the plurality of separators 230, and the plurality of second electrodes 220 are stacked sequentially in the third direction will be described as an example. However, the electrode assembly 200 is not limited to the form described above, and may be formed in such a way that the first electrode 210, the separator 230, and the second electrode 220 are stacked and then wound around a winding axis in a clockwise or counterclockwise direction.

The first electrode 210 may function as one of a positive electrode and a negative electrode of the electrode assembly 200. Herein, a case in which the first electrode 210 is a positive electrode of the electrode assembly 200 will be described as an example. However, the first electrode 210 is not limited to thereto, and may function as a negative electrode of the electrode assembly 200.

The first electrode 210 according to the present embodiment may be formed in a form of a foil including a metal material, such as aluminum or an aluminum alloy. A type, size, shape, and the like of the first electrode 210 are not particularly limited as long as the first electrode 210 has conductivity and does not cause chemical changes in the secondary battery. A cross-sectional shape of the first electrode 210 may be varied to various shapes other than a rectangular shape, as shown in FIG. 4.

A plurality of first electrodes 210 may be provided. The plurality of first electrodes 210 may be arranged in the third direction between the front surface portion 120 and the rear surface portion 130 of the case 100. A number of the first electrodes 210 may be varied according to a charging capacity or the like of the secondary battery 2.

A first active material layer 211 may be applied to at least a portion of the first electrode 210. The first active material layer 211 may be applied to both, or opposite, surfaces of the first electrode 210, or may be applied to only one surface of the first electrode 210.

In an embodiment, the first electrode 210 functions as the positive electrode, and the first active material layer 211 may include a positive electrode active material.

The positive electrode active material may include a compound (lithiated intercalation compound) capable of reversibly intercalating and deintercalating lithium. In an embodiment, the positive electrode active material may include one or more types of composite oxides of lithium and a metal selected from cobalt, manganese, nickel, iron, and a combination thereof.

As an example, the positive electrode active material may include at least one of lithium-iron-phosphate oxide (LiFePO₄, LFP), lithium-manganese-iron-phosphate oxide (LiMnFePO₄, LMFP), and lithium-nickel-cobalt-manganese oxide (LiNiₓCo_{y}Mn_{z}O₂, NCM). Here, conditions of 0<x<1, 0<y<1, 0<z<1, and x+y+z=1 may be satisfied. The positive electrode active material may include only one of LiFePO₄ (LFP), LiMnFePO₄ (LMFP), and LiNiₓCo_{y}Mn_{z}O₂ (NCM) or may include two or all of LiFePO₄, LiMnFePO₄, and LiNiₓCo_{y}Mn_{z}O₂.

The first active material layer 211 may further include a positive electrode conductive material.

The positive electrode conductive material imparts conductivity to the first active material layer 211, and any electrically conductive material that does not cause a chemical change in the battery may be used. Examples of the positive electrode conductive material may include a carbon-based material, such as natural graphite, artificial graphite, carbon black, acetylene black, Ketjen black, carbon fiber, carbon nanofiber, carbon nanotubes, and the like, a metal-based material in the form of a metal powder or metal fiber including copper, nickel, aluminum, silver, and the like, a conductive polymer, such as a polyphenylene derivative, or a mixture thereof.

The first active material layer 211 may further include a positive electrode binder.

The positive electrode binder adheres particles constituting the positive electrode active material to each other well, and adheres the positive electrode active material to the first electrode 210 well.

Examples of the positive electrode binder may include a non-aqueous binder, an aqueous binder, a dry binder, or a combination thereof.

The non-aqueous binder may include polyvinylchloride, carboxylated polyvinylchloride, polyvinylfluoride, an ethylene propylene copolymer, polystyrene, polyurethane, polytetrafluoroethylene, polyvinylidene fluoride, polyethylene, polypropylene, polyamideimide, polyimide, or a combination thereof.

The aqueous binder may be selected from styrene-butadiene rubber, (meth)acrylated styrene-butadiene rubber, (meth)acrylonitrile-butadiene rubber, (meth)acrylic rubber, butyl rubber, fluororubber, a polyethylene oxide, polyvinylpyrrolidone, polyepichlorohydrin, polyphosphazene, poly(meth)acrylonitrile, an ethylene propylene diene copolymer, polyvinylpyridine, chlorosulfonated polyethylene, latex, a polyester resin, a (meth)acrylic resin, a phenolic resin, an epoxy resin, polyvinyl alcohol, and a combination thereof.

If the aqueous binder is used as the positive electrode binder, a cellulose-based compound capable of imparting viscosity may be further included. As the cellulose-based compound, one or more of carboxymethyl cellulose, hydroxypropylmethyl cellulose, methyl cellulose, or alkali metal salts thereof may be used in combination. In an embodiment, Na, K, or Li may be used as the alkali metal.

The dry binder is a polymer material capable of being fiberized, and may be, for example, polytetrafluoroethylene, polyvinylidene fluoride, a polyvinylidene fluoride-hexafluoropropylene copolymer, a polyethylene oxide, or a combination thereof.

The first electrode 210 may include a first uncoated portion 212 to which the first active material layer 211 is not applied. The first uncoated portion 212 according to an embodiment may be disposed at an upper end region of the first electrode 210, which is disposed to face the opening 160 from inside the case 100. However, the first uncoated portion 212 is not limited to such a form, and, in an embodiment, may be formed over the entire edge region of the first electrode 210.

The second electrode 220 may function as the other one of the positive electrode and the negative electrode of the electrode assembly 200. Herein, a case in which the second electrode 220 is the negative electrode of the electrode assembly 200 will be described as an example. However, the second electrode 220 is not limited thereto, and may function as the positive electrode of the electrode assembly 200.

A plurality of second electrodes 220 may be provided. The plurality of second electrodes 220 may be arranged in the third direction between the front surface portion 120 and the rear surface portion 130 of the case 100. The first electrode 210 and the second electrode 220 may be alternately disposed in the third direction. The second electrode 220 may be spaced apart from the first electrode 210 by a distance (e.g., a predetermined distance) in the third direction.

The second electrode 220 according to an embodiment may be formed in a form of a foil including a metal material, such as copper, a copper alloy, nickel, or a nickel alloy. A type, size, shape, and the like of the second electrode 220 are not particularly limited as long as the second electrode 220 has conductivity and does not cause chemical changes in the secondary battery. A cross-sectional shape of the first electrode 210 may have any of various shapes, other than the rectangular shape shown in FIG. 4.

A second active material layer 221 may be applied to at least a portion of the second electrode 220. The second active material layer may be applied to both, or opposite, surfaces of the second electrode 220, or the second active material layer may be applied to only one surface of the second electrode 220.

In an embodiment, the second electrode 220 functions as a negative electrode, and the second active material layer 221 may include a negative electrode active material.

The negative electrode active material may be a material that reversibly intercalates/deintercalates lithium ions, a lithium metal, a lithium metal alloy, a material capable of doping and dedoping lithium, or a transition metal oxide.

The material capable of reversible intercalation and deintercalation of lithium ions is a carbon-based negative electrode active material, and may include, for example, crystalline carbon, amorphous carbon, or a combination thereof. Examples of the crystalline carbon may include graphite, such as amorphous, plate-shaped, flake-shaped, spherical-shaped or fiber-shaped natural graphite or artificial graphite. Examples of the amorphous carbon may include soft carbon or hard carbon, a mesophase pitch carbide product, calcined coke, and the like.

The lithium metal alloy may be an alloy of lithium and a metal selected from Na, K, Rb, Cs, Fr, Be, Mg, Ca, Sr, Si, Sb, Pb, In, Zn, Ba, Ra, Ge, Al, and Sn.

A Si-based negative electrode active material or a Sn-based negative electrode active material may be used as the material capable of doping and dedoping lithium. The Si-based negative electrode active material may include silicon, a silicon-carbon composite, SiOₓ (0<x<2), a Si-Q alloy (where, Q is selected from an alkali metal, an alkaline-earth metal, a Group 13 element, a Group 14 element (excluding Si), a Group 15 element, a Group 16 element, a transition metal, a rare-earth element, and a combination thereof), or a combination thereof. The Sn-based negative electrode active material may include Sn, SnO₂, a Sn-based alloy, or a combination thereof.

The silicon-carbon composite may be a composite of silicon and amorphous carbon. According to an embodiment, the silicon-carbon composite may be in the form of silicon particles and amorphous carbon coated on the surface of the silicon particles. For example, the silicon-carbon composite may include a secondary particle (core) in which silicon primary particles are agglomerated and an amorphous carbon coating layer (shell) located on the surface of the secondary particle. The amorphous carbon may also be located between the silicon primary particles, such that, for example, the silicon primary particles are coated with amorphous carbon. The secondary particles may be dispersed in an amorphous carbon matrix.

The silicon-carbon composite may further include crystalline carbon. For example, the silicon-carbon composite may include a core including crystalline carbon and silicon particles and an amorphous carbon coating layer located on the surface of the core.

The Si-based negative electrode active material or the Sn-based negative electrode active material may be used by being mixed with a carbon-based negative electrode active material.

The second active material layer 221 may further include a negative electrode conductive material and a negative electrode binder.

The negative electrode conductive material imparts conductivity to the second active material layer 221, and any electrically conductive material that does not cause a chemical change in the battery may be used. Examples of the negative electrode conductive material may include a carbon-based material, such as natural graphite, artificial graphite, carbon black, acetylene black, Ketjen black, carbon fiber, carbon nanofiber, carbon nanotubes, and the like, a metal-based material in the form of a metal powder or metal fiber including copper, nickel, aluminum, silver, and the like, a conductive polymer, such as a polyphenylene derivative, or a mixture thereof.

The negative electrode binder adheres particles constituting the negative electrode active material to each other well, and adheres the negative electrode active material to the second electrode 220 well.

Examples of the negative electrode binder may include a non-aqueous binder, an aqueous binder, a dry binder, or a combination thereof.

The non-aqueous binder may include polyvinylchloride, carboxylated polyvinylchloride, polyvinylfluoride, an ethylene propylene copolymer, polystyrene, polyurethane, polytetrafluoroethylene, polyvinylidene fluoride, polyethylene, polypropylene, polyamideimide, polyimide, or a combination thereof.

The aqueous binder may be selected from styrene-butadiene rubber, (meth)acrylated styrene-butadiene rubber, (meth)acrylonitrile-butadiene rubber, (meth)acrylic rubber, butyl rubber, fluororubber, a polyethylene oxide, polyvinylpyrrolidone, polyepichlorohydrin, polyphosphazene, poly(meth)acrylonitrile, an ethylene propylene diene copolymer, polyvinylpyridine, chlorosulfonated polyethylene, latex, a polyester resin, a (meth)acrylic resin, a phenolic resin, an epoxy resin, polyvinyl alcohol, and a combination thereof.

If the aqueous binder is used as the negative electrode binder, a cellulose-based compound capable of imparting viscosity may be further included. As the cellulose-based compound, one or more of carboxymethyl cellulose, hydroxypropylmethyl cellulose, methyl cellulose, or alkali metal salts thereof may be used in combination. In an embodiment, Na, K, or Li may be used as the alkali metal.

The dry binder is a polymer material capable of being fiberized, and may be, for example, polytetrafluoroethylene, polyvinylidene fluoride, a polyvinylidene fluoride-hexafluoropropylene copolymer, a polyethylene oxide, or a combination thereof.

The second electrode 220 may include a second uncoated portion 222 to which the second active material layer 221 is not applied. The second uncoated portion 222 according to an embodiment may be disposed at an upper end region of the second electrode 220 disposed to face the opening 160 from inside the case 100. However, the second uncoated portion 222 is not limited to such a form, and, in an embodiment, may be formed over the entire edge region of the second electrode 220.

The separator 230 may be disposed between the first electrode 210 and the second electrode 220. The separator 230 may prevent or substantially prevent a short circuit between the first electrode 210 and the second electrode 220 while allowing the movement of lithium ions between the first electrode 210 and the second electrode 220.

In an embodiment, the separator 230 may be disposed to cover an entire surface region of the electrode assembly 200. Accordingly, the separator 230 may prevent or substantially prevent the first electrode 210 and the second electrode 220 from being directly exposed to the outside of the electrode assembly 200.

The separator 230 may be made of polyethylene, polypropylene, polyvinylidene fluoride, or a multilayer film of two or more layers thereof, and may be made of a mixed multilayer film, such as a polyethylene/polypropylene double-layered separator, a polyethylene/polypropylene/polyethylene three-layered separator, and a polypropylene/polyethylene/polypropylene three-layered separator.

The separator 230 may include a porous substrate, and a coating layer including an organic material, an inorganic material, or a combination thereof located on one surface or both, or opposite, surfaces of the porous substrate.

The porous substrate may be a polymer film formed of a polymer, or a copolymer or mixture of two or more selected from polyolefins, such as polyethylene, polypropylene, and the like, polyesters, such as polyethylene terephthalate, polybutylene terephthalate, and the like, polyacetal, polyamide, polyimide, polycarbonate, polyetheretherketone, polyaryletherketone, polyetherimide, polyamideimide, polybenzimidazole, polyether sulfone, a polyphenylene oxide, a cyclic olefin copolymer, polyphenylene sulfide, polyethylene naphthalate, glass fibers, and polytetrafluoroethylene (e.g., Teflon).

The organic material may include a polyvinylidene fluoride-based polymer or a (meth)acrylic-based polymer.

The inorganic material may include inorganic particles selected from Al₂O₃, SiO₂, TiO₂, SnO₂, CeO₂, MgO, NiO, CaO, GaO, ZnO, ZrO₂, Y₂O₃, SrTiO₃, BaTiO₃, Mg(OH)₂, boehmite, and a combination thereof, but the present disclosure is not limited thereto.

The organic and inorganic materials may be present by being mixed in one coating layer or may be present in a form in which a coating layer including organic materials and a coating layer including inorganic materials are stacked.

The electrode assembly 200 according to an embodiment may further include a first tab member 240 and a second tab member 250.

The first tab member 240 is connected to the first electrode 210, and may protrude outward from the electrode assembly 200. In an embodiment, the first electrode 210 is the positive electrode, and the first tab member 240 may function as a positive electrode tab of the secondary battery 2. However, the first tab member 240 is not limited thereto, and may function as a negative electrode tab of the secondary battery 2 if the first electrode 210 is the negative electrode.

The first tab member 240 according to an embodiment may extend in the first direction from the electrode assembly 200. As an example, the first tab member 240 may extend toward the opening 160 from inside the case 100.

The first tab member 240 according to an embodiment may be provided as a plurality of first tab members 240. The plurality of first tab members 240 may be spaced apart from each other in the second direction. In FIG. 3, a case in which two first tab member 240 are formed is illustrated as an example, but a number of the first tab members 240 is not limited thereto and may include various numbers, such as three or four.

The first tab member 240 may include a first tab 241.

The first tab 241 according to an embodiment may have a form of a foil extending in the first direction from the first uncoated portion 212 of the first electrode 210. In an embodiment, the first tab 241 may have a generally rectangular shape. However, the shape of the first tab 241 is not limited thereto, and may be varied in design.

In an embodiment, the first tab 241 may be integrally formed with the first electrode 210. For example, the first tab 241 may be a remaining region of the first uncoated portion 212 after a partial region of the first uncoated portion 212 has been cut or removed through a process such as notching. In another embodiment, the first tab 241 may be fabricated separately from the first electrode 210 and then connected to the first uncoated portion 212 by welding or the like. In an embodiment, a material of the first tab 241 may be the same as the material of the first electrode 210.

A plurality of first tabs 241 may be provided. The number of the first tabs 241 may be the same as the number of the first electrodes 210. The first tabs 241 may individually extend from the first uncoated portions 212 of the first electrodes 210, respectively. The adjacent first tabs 241 may be disposed to face each other in the third direction. The adjacent first tabs 241 may be disposed parallel to each other. Accordingly, the first tab member 240 according to an embodiment may be an assembly of the plurality of first tabs 241 stacked in the third direction. The adjacent first tabs 241 may be in contact with each other and may be spaced apart from each other by a thickness of the separator 230.

The second tab member 250 is connected to the second electrode 220, and may protrude outward from the electrode assembly 200. In an embodiment, the second electrode 220 is the negative electrode, and the second tab member 250 may function as a negative electrode tab of the secondary battery 2. However, the second tab member 250 is not limited thereto, and may function as a positive electrode tab of the secondary battery 2 if the second electrode 220 is the positive electrode.

The second tab member 250 according to an embodiment may extend in the first direction from the electrode assembly 200. That is, the second tab member 250 may extend toward the opening 160 from inside the case 100.

The first tab member 240 and the second tab member 250 may be disposed to be spaced apart from each other in the second direction. As an example, the second tab member 250 may be disposed at a position spaced apart from the first tab member 240 in the second direction by a distance (e.g., a predetermined distance).

The second tab member 250 according to an embodiment may be provided as a plurality of second tab members 250. The plurality of second tab members 250 may be spaced apart from each other in the second direction. In FIG. 3, a case in which two second tab members 250 are formed is illustrated as an example, but a number of the second tab members 250 is not limited thereto and may include any of various numbers, such as three or four.

The second tab member 250 may include a second tab 251.

The second tab 251 according to an embodiment may have a form of a foil extending in the first direction from the second uncoated portion 222 of the second electrode 220. The second tab 251 may have a generally rectangular shape. However, the shape of the second tab 251 is not limited thereto, and may be varied in design.

In an embodiment, the second tab 251 may be integrally formed with the second electrode 220. For example, the second tab 251 may be a remaining region of the second uncoated portion 222 after a partial region of the second uncoated portion 222 has been cut or removed through a process, such as notching. In another embodiment, the second tab 251 may be fabricated separately from the second electrode 220 and then connected to the second uncoated portion 222 by welding or the like. In an embodiment, a material of the second tab 251 may be the same as the material of the second electrode 220.

A plurality of second tabs 251 may be provided. The number of the second tabs 251 may be the same as the number of the second electrodes 220. The second tabs 251 may individually extend from the second uncoated portions 222 of the different second electrodes 220, respectively. The adjacent second tabs 251 may be disposed to face each other in the third direction. The adjacent second tabs 251 may be disposed parallel to each other. Accordingly, the second tab member 250 according to an embodiment may be an assembly of the plurality of second tabs 251 stacked in the third direction. The adjacent second tabs 251 may be in contact with each other and may be spaced apart from each other by the thickness of the separator 230.

The cap plate 300 may be coupled to the case 100 and may seal the case 100.

The cap plate 300 according to an embodiment may be formed to have a shape of a flat plate. The cap plate 300 may be disposed in the opening 160 of the case 100. The cap plate 300 may be disposed to face the electrode assembly 200 in the first direction. That is, the cap plate 300 may be disposed at a position spaced apart from the electrode assembly 200 by a distance (e.g., a predetermined distance) in the first direction. The cap plate 300 may be disposed parallel to the bottom portion 110 of the case 100.

The cap plate 300 may be seated on an upper end portion of the case 100, and, in an embodiment, on upper end portions of the front surface portion 120, the rear surface portion 130, the first side surface portion 140, and the second side surface portion 150. The cap plate 300 may be coupled to the case 100 by any of various types of coupling methods, such as welding, latching, bolting, fitting coupling, and the like.

The cap plate 300 may include a first surface 301 and a second surface 302 that are opposite each other.

The first and second surfaces 301 and 302 of the cap plate 300 may be disposed to be spaced apart from each other in the first direction. The first surface 301 may be disposed to face the electrode assembly 200.

The first surface 301 may be a lower surface of the cap plate 300, which is disposed to face an upper surface of the electrode assembly 200, from which the first tab member 240 and the second tab member 250 protrude.

The second surface 302 may be disposed to face a space external to the case 100. The second surface 302 may be an upper surface of the cap plate 300, which is disposed opposite the first surface 301.

A vent hole 310 and a vent 320 may be formed in the cap plate 300 according to an embodiment.

The vent hole 310 according to an embodiment may be formed to have a shape of a hole vertically passing through the first surface 301 and the second surface 302 of the cap plate 300 in the first direction. The vent hole 310 may provide a path for flames, gases, smoke, or the like formed inside the case 100 to be discharged to the outside of the case 100 in an event of a thermal runaway of the secondary battery 2 due to overcurrent or the like. A cross-sectional shape of the vent hole 310 may have any of various shapes, such as an oval shape, a circular shape, and a polygonal shape.

The vent 320 is installed in the vent hole 310, and may open and close in response to a change in an internal pressure of the case 100. That is, the vent 320 may close the vent hole 310 during a normal operation of the secondary battery 2 to prevent or substantially prevent the electrolyte or the like inside the case 100 from leaking out of the case 100, or to block moisture, foreign substances, or the like from entering the case 100. The vent 320 may open the vent hole 310 during thermal runaway of the secondary battery 2 to guide flames, gases, smoke, or the like formed inside the case 100 to be discharged to the outside of the case 100.

The vent 320 according to an embodiment may be formed to have a generally plate shape. The vent 320 may be fixed to the cap plate 300 by any of various types of coupling methods, such as welding, bolting, latching, fitting coupling, and the like. The vent 320 may be disposed inside the vent hole 310, or may be disposed on an upper or lower side of the cap plate 300 to face the vent hole 310 in the first direction.

In an embodiment, a thickness of the vent 320 in the first direction may be less than a thickness of the cap plate 300. Accordingly, the vent 320 may easily rupture or fracture if the internal pressure of the case 100 increases. In an embodiment, the vent 320 may include a notch formed to be recessed into the vent 320 to preferentially fracture if the internal pressure of the case 100 increases.

An electrolyte injection port 330, which is formed through the cap plate 300 and in which a sealing cap may be installed, may be formed in the cap plate 300 according to an embodiment. The electrolyte injection port 330 may be disposed to be spaced apart by a distance (e.g., a predetermined distance) from the vent hole 310 in the second direction or in a direction opposite to the second direction. The electrolyte injection port 330 may be disposed between the terminals 400.

An insulating plate 340 may be disposed between the cap plate 300 and the electrode assembly 200 according to an embodiment. The insulating plate 340 may insulate the cap plate 300 from the electrode assembly 200 by preventing or substantially preventing direct contact therebetween. The insulating plate 340 may fix the position of the electrode assembly 200 inside the case 100. The insulating plate 340 may prevent or substantially prevent the electrode assembly 200 from breaking if the cap plate 300 is deformed into the case 100, by an external impact or the like.

The insulating plate 340 according to an embodiment may be disposed inside the case 100 to face the electrode assembly 200 in the first direction. That is, the electrode assembly 200, the insulating plate 340, and the cap plate 300 may be sequentially disposed in the first direction. The insulating plate 340 may be fixed to an inner side surface of the case 100 by any of various types of coupling methods, such as fitting coupling, welding, bolting, adhesion, and the like. The insulating plate 340 may be in contact with a surface of the electrode assembly 200 from which the first tab member 240 and the second tab member 250 extend. The insulating plate 340 may be formed of an insulating material, such as polyethylene (PE), polypropylene (PP), polyethylene terephthalate (PET), rubber, or the like.

The terminals 400 may provide an electrical connection for the secondary battery 2 to the bus bar 3 or an external power device.

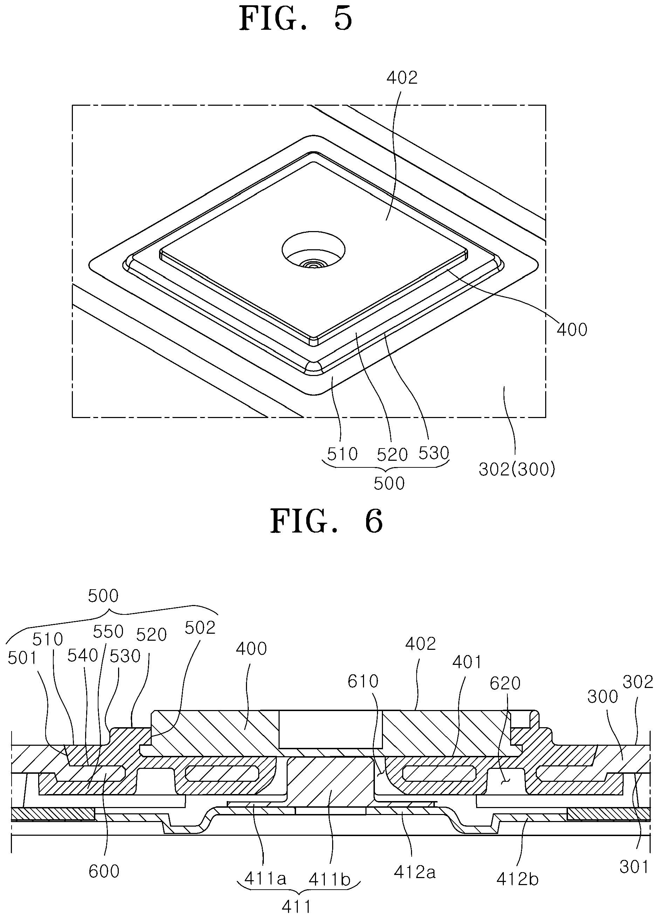

FIG. 5 is a perspective view schematically illustrating a configuration of the terminal and the gasket according to an embodiment of the present disclosure; and FIG. 6 is a cross-sectional view schematically illustrating a configuration of the terminal and the gasket according to an embodiment of the present disclosure.

Referring to FIGS. 1 to 6, the terminal 400 according to an embodiment may be formed of an electrically conductive material, such as aluminum, nickel, copper, or the like. The terminal 400 may be inserted into a terminal hole 350 formed by passing through the cap plate 300. An upper end portion of the terminal 400 may protrude outward from the cap plate 300.

The terminal 400 may include a first terminal surface 401 and a second terminal surface 402 that are opposite each other. The first terminal surface 401 and the second terminal surface 402 may be spaced apart from each other in the first direction.

In the present embodiment, the first terminal surface 401 may refer to a lower surface of the terminal 400 disposed to face the electrode assembly 200, and the second terminal surface 402 may refer to an upper surface of the terminal 400 disposed to face the outside of the cap plate 300.

In an embodiment, a height h of the second terminal surface 402 may be 3 mm. The height h of the second terminal surface 402 may refer to a vertical distance from a plane, on which the second surface 302 of the cap plate 300 is located, to the second terminal surface 402.

The bus bar 3 may be seated on the second terminal surface 402. In an embodiment, the bus bar 3 and the second terminal surface 402 may be bonded (e.g., integrally bonded) by laser welding or the like.

In FIGS. 5 and 6, the terminal 400 is illustrated as having a rectangular cross-sectional shape as an example, but the cross-sectional shape of the terminal 400 is not limited thereto, and may have any of various shapes, such as a circular, elliptical, or polygonal shape.

A pair of terminals 400 may be provided. The pair of terminals 400 may be disposed to be spaced apart by a distance (e.g., a predetermined distance) in the second direction. The pair of terminals 400 may be disposed to face each other in the second direction with the vent hole 310 interposed therebetween.

One of the pair of terminals 400 may be disposed to face the first tab member 240 in the first direction, and the other of the pair of terminals 400 may be disposed to face the second tab member 250 in the first direction.

The pair of terminals 400 may be individually connected to the first electrode 210 and the second electrode 220 of the electrode assembly 200, respectively. Accordingly, the pair of terminals 400 may function as positive and negative terminals of the secondary battery 2, respectively.

The pair of terminals 400 may be electrically connected to the first electrode 210 and the second electrode 220 by a first connection member 410 and a second connection member 420, respectively.

The first connection member 410 may be disposed between the electrode assembly 200 and the cap plate 300. The first connection member 410 may connect the terminal 400, which is disposed to face the first tab member 240, of the pair of terminals 400 to the first tab member 240. The first connection member 410 may be formed of an electrically conductive material. In an embodiment, the first connection member 410 may be formed of a same material as the terminal 400.

The first connection member 410 according to an embodiment may include a first current collector 411 and a first current collector plate 412.

The first current collector 411 may be connected to the terminal 400, which is disposed to face the first tab member 240, of the pair of terminals 400.

The first current collector 411 according to an embodiment may include a first body 411a and a first boss 411b.

The first body 411a forms a side of the exterior of the first current collector 411, and may support the first boss 411b.

The first body 411a according to an embodiment may be disposed between the first tab member 240 and the terminal 400. The first body 411a may be spaced by a distance (e.g., a predetermined distance) in the first direction from the lower surface of the terminal 400 disposed to face the first tab member 240. The first body 411a may be disposed in the insulating plate 340, or the first body 411a may be disposed on an upper or lower side of the insulating plate 340. A cross-sectional shape of the first body 411a may have any of various shapes, such as a circular shape, an oval shape, a polygonal shape, and the like, in addition to a rectangular shape, as illustrated in FIG. 3.

The first boss 411b may extend from the first body 411a and may be connected to the terminal 400 disposed to face the first tab member 240.

The first boss 411b according to an embodiment may have a form of a cylinder extending in the first direction from the first body 411a. An upper end surface of the first boss 411b may be in contact with the lower surface of the terminal 400 disposed to face the first tab member 240. In this case, the first boss 411b may vertically pass through the insulating plate 340 in the first direction. A cross-sectional shape of the first boss 411b may have any of various shapes, such as an oval shape, a polygonal shape, and the like, in addition to a circular shape, as illustrated in FIG. 3. In an embodiment, an upper end surface of the first boss 411b may be bonded to a lower surface of the terminal 400 by laser welding.

The first current collector plate 412 is fixed to the first current collector 411, and may be connected to the first tab member 240.

The first current collector plate 412 according to an embodiment may include a first center plate 412a and a first extension plate 412b.

The first center plate 412a forms a central portion of the exterior of the first current collector plate 412, and may be connected to the first current collector 411.

The first center plate 412a according to an embodiment may be disposed between the first body 411a and the electrode assembly 200. The first center plate 412a may be in contact with a lower surface of the first body 411a located at an opposite side of the first boss 411b. The first center plate 412a may be fixed to the lower surface of the first body 411a by any of various types of coupling methods, such as welding, bolting, adhesion, and the like.

Both, or opposite, end portions of the first center plate 412a may extend from the first body 411a toward the electrode assembly 200. Both, or opposite, end portions of the first center plate 412a may pass through the insulating plate 340 and be disposed below the insulating plate 340.

The first extension plate 412b may extend and come into contact with the first tab member 240.

The first extension plate 412b according to an embodiment may be provided as a pair. The pair of first extension plates 412b may extend from both, or opposite, end portions of the first center plate 412a in the second direction and a direction opposite to the second direction, respectively. The first extension plates 412b may be disposed to face different first tab members 240, respectively, in the first direction. The first extension plates 412b may be individually in contact with end surfaces of different first tab members 240, respectively. In an embodiment, the first tab member 240 and the first extension plate 412b may be bonded to each other by laser welding.

The second connection member 420 may be disposed between the electrode assembly 200 and the cap plate 300. The second connection member 420 may connect the terminal 400, which is disposed to face the second tab member 250, of the pair of terminals 400 to the second tab member 250. The second connection member 420 may be formed of an electrically conductive material. In an embodiment, the second connection member 420 may be formed of a same material as the terminal 400.

The second connection member 420 according to an embodiment may include a second current collector 421 and a second current collector plate 422.

The second current collector 421 may be connected to the terminal 400, which is disposed to face the second tab member 250, of the pair of terminals 400.

The second current collector 421 according to an embodiment may include a second body 421a and a second boss 421b.

The second body 421a forms a side of the exterior of the second current collector 421, and may support the second boss 421b.

The second body 421a according to an embodiment may be disposed between the second tab member 250 and the terminal 400. The second body 421a may be spaced by a distance (e.g., a predetermined distance) in the first direction from the lower surface of the terminal 400 disposed to face the second tab member 250. The second body 421a may be disposed in the insulating plate 340, or the second body 421a may be disposed on the upper or lower side of the insulating plate 340. A cross-sectional shape of the second body 421a may have any of various shapes, such as a circular shape, an oval shape, a polygonal shape, and the like, in addition to a rectangular shape, as illustrated in FIG. 3.

The second boss 421b may extend from the second body 421a and may be connected to the terminal 400 disposed to face the second tab member 250.

The second boss 421b according to an embodiment may have a form of a cylinder extending in the first direction from the second body 421a. An upper end surface of the second boss 421b may be in contact with the lower surface of the terminal 400 disposed to face the second tab member 250. In this case, the second boss 421b may vertically pass through the insulating plate 340 in the first direction. A cross-sectional shape of the second boss 421b may have any of various shapes, such as an oval shape, a polygonal shape, and the like, in addition to a circular shape, as illustrated in FIG. 3. In an embodiment, an upper end surface of the second boss 421b may be bonded to the lower surface of the terminal 400 by laser welding.

The second current collector plate 422 is fixed to the second current collector 421, and may be connected to the second tab member 250.

The second current collector plate 422 according to an embodiment may include a second center plate 422a and a second extension plate 422b.

The second center plate 422a forms a central portion of the exterior of the second current collector plate 422, and may be connected to the second current collector 421.

The second center plate 422a according to an embodiment may be disposed between the second body 421a and the electrode assembly 200. The second center plate 422a may be in contact with a lower surface of the second body 421a located on the opposite side of the second boss 421b. The second center plate 422a may be fixed to the lower surface of the second body 421a by any of various types of coupling methods, such as welding, bolting, latching, adhesion, and the like.

Both, or opposite, end portions of the second center plate 422a may extend from the second body 421a toward the electrode assembly 200. Both, or opposite, end portions of the second center plate 422a may pass through the insulating plate 340 and be disposed below the insulating plate 340.

The second extension plate 422b may extend and come into contact with the second tab member 250.

The second extension plate 422b according to an embodiment may be provided as a pair. The pair of second extension plates 422b may extend from both, or opposite, end portions of the second center plate 422a in the second direction and a direction opposite to the second direction, respectively. The second extension plates 422b may be disposed to face different second tab members 250, respectively, in the first direction. The second extension plates 422b may be individually in contact with end surfaces of different second tab members 250, respectively. In an embodiment, the second tab member 250 and the second extension plate 422b may be bonded to each other by laser welding.

The gasket 500 may be disposed between the cap plate 300 and the terminal 400. The gasket 500 may electrically insulate the cap plate 300 and the terminal 400 from each other. The gasket 500 may be formed of an insulating material, such as polyethylene (PE), polypropylene (PP), polyethylene terephthalate (PET), rubber, or the like.

A pair of gaskets 500 may be provided. One of the pair of gaskets 500 may be disposed between the terminal 400 connected to the first connection member 410, and the cap plate 300. The other one of the pair of gaskets 500 may be disposed between the terminal 400 connected to the second connection member 420, and the cap plate 300.

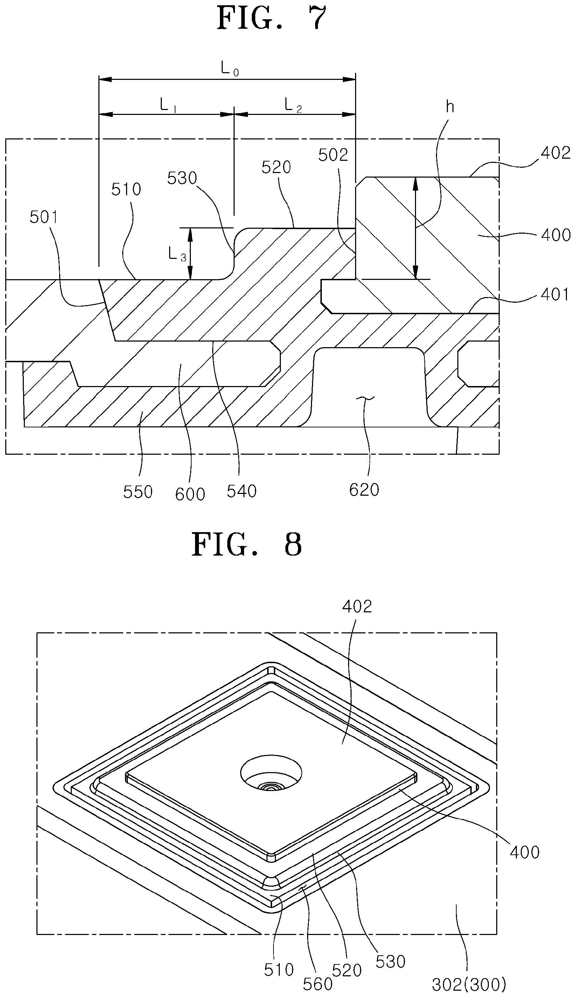

FIG. 7 is an enlarged cross-sectional view schematically illustrating a configuration of the gasket according to an embodiment of the present disclosure.

Herein, of the pair of gaskets 500, the gasket 500 disposed between the terminal 400 connected to the first connection member 410 and the cap plate 300 will be described as an example. The description of the gasket 500 provided below may be equally applied to the gasket 500 that is disposed between the terminal 400 connected to the second connection member 420 and the cap plate 300.

Referring to FIG. 7, the gasket 500 according to an embodiment may be disposed inside the terminal hole 350. The gasket 500 may include a first end portion 501 and a second end portion 502.

The first end portion 501 and the second end portion 502 may be partial regions of the entire region of the gasket 500, which come into contact with the cap plate 300 and the terminal 400, respectively.

The first end portion 501 according to an embodiment may be an outer peripheral surface of the gasket 500, which is in contact with an inner peripheral surface of the cap plate 300 disposed to surround the terminal hole 350. The first end portion 501 may extend in the inner peripheral surface of the cap plate 300.

The second end portion 502 according to an embodiment may be an inner peripheral surface of the gasket 500, which is in contact with an outer peripheral surface of the terminal 400. In an embodiment, the second end portion 502 may be disposed to surround an entire outer peripheral surface of the terminal 400.

A creepage distance of the gasket 500 according to an embodiment may be greater than a distance L₀ between the first end portion 501 and the second end portion 502. Here, the creepage distance of the gasket 500 may be a shortest distance that connects the first end portion 501 and the second end portion 502 along a surface (an upper surface based on FIG. 7) of the gasket 500, which is exposed to the outside of the cap plate 300. Accordingly, the gasket 500 can maintain insulation between the cap plate 300 and the terminals 400 reliably.

In an embodiment, the creepage distance of the gasket 500 may be greater than or equal to 6 mm and less than or equal to 10 mm. In an embodiment, the creepage distance of the gasket 500 may be 8.7 mm. If the creepage distance of the gasket 500 is less than 6 mm, sufficient insulation may not be secured between the cap plate 300 and the terminal 400. If the creepage distance of the gasket 500 is greater than 10 mm, a shape of the gasket 500 may not be consistently maintained during injection molding of the gasket 500.

The gasket 500 according to an embodiment may include a first insulating surface 510, a second insulating surface 520, and a third insulating surface 530.

The first insulating surface 510, the second insulating surface 520, and the third insulating surface 530 may form an exterior surface of the gasket 500 exposed to the outside of the cap plate 300.

The first insulating surface 510 according to an embodiment may extend from the first end portion 501 toward the terminal 400. The first insulating surface 510 may be disposed parallel to the second surface 302 of the cap plate 300. The first insulating surface 510 may be disposed on the same plane as the second surface 302 of the cap plate 300. In an embodiment, the second surface 302 of the cap plate 300 and the first insulating surface 510 may be disposed to form a continuous plane.

The second insulating surface 520 according to an embodiment may be spaced apart from the first insulating surface 510 and may extend from the second end portion 502 toward the cap plate 300. In an embodiment, the first insulating surface 510 may be disposed parallel to the second surface 302 of the cap plate 300. The second insulating surface 520 may be disposed on a plane different from that of the first insulating surface 510. As an example, the second insulating surface 520 may be disposed to be higher than the first insulating surface 510 and the second surface 302. That is, a distance from the electrode assembly 200 to the second insulating surface 520 may be greater than a distance from the electrode assembly 200 to the first insulating surface 510. The gasket 500 may be formed to have a relatively greater height on the side of the second end portion 502, which is in contact with the terminal 400, than on the side of the first end portion 501, which is in contact with the cap plate 300. Accordingly, the gasket 500 can more firmly support the terminal 400 inside the terminal hole 350.

The third insulating surface 530 according to an embodiment may be disposed between the first insulating surface 510 and the second insulating surface 520. The third insulating surface 530 may be disposed to intersect with the second surface 302 of the cap plate 300. As an example, the third insulating surface 530 may be disposed to be perpendicular to the second surface 302 of the cap plate 300. A lower end portion of the third insulating surface 530 may be connected to an inner side end position of the first insulating surface 510 located on the opposite side of the first end portion 501. An upper end portion of the third insulating surface 530 may be connected to an outer side end portion of the second insulating surface 520 located on the opposite side of the second end portion 502.

In an embodiment, the creepage distance of the gasket 500 may be the sum of a creepage distance L₁ of the first insulating surface 510, a creepage distance L₂ of the second insulating surface 520, and a creepage distance L₃ of the third insulating surface 530.

The creepage distance L₁ of the first insulating surface 510 may be a shortest distance from the first end portion 501 to the lower end portion of the third insulating surface 530, the creepage distance L₂ of the second insulating surface 520 may be a shortest distance from the second end portion 502 to the upper end portion of the third insulating surface 530, and the creepage distance L₃ of the third insulating surface 530 may be a distance from the lower end portion of the third insulating surface 530 to the upper end portion of the third insulating surface 530.

In an embodiment, the creepage distance L₁ of the first insulating surface 510 may be greater than or equal to 3 mm and less than or equal to 5 mm. As an example, the creepage distance L₁ of the first insulating surface 510 may be 4.2 mm.

The creepage distance L₂ of the second insulating surface 520 may be less than the creepage distance L₁ of the first insulating surface 510. In an embodiment, the creepage distance L₂ of the second insulating surface 520 may be greater than or equal to 1 mm and less than or equal to 4 mm. In an embodiment, the creepage distance L₂ of the second insulating surface 520 may be 3 mm. If the creepage distance L₂ of the second insulating surface 520 is less than 1 mm, a width of an inner side region of the gasket 500 in contact with the terminal 400 may be excessively reduced, which may weaken a supporting force of the gasket 500 against the terminal 400. If the creepage distance L₂ of the second insulating surface 520 is greater than 4 mm, injection of the gasket 500 may not proceed smoothly.

In an embodiment, the creepage distance L₃ of the third insulating surface 530 may be greater than or equal to 1 mm and less than or equal to 3 mm. If the creepage distance L₃ of the third insulating surface 530 is less than 1 mm, an amount of increase in the creepage distance of the gasket 500 relative to the distance L₀ between the first end portion 501 and the second end portion 502 may be excessively reduced, which may result in insufficient insulation performance between the cap plate 300 and the terminal 400. If the creepage distance L₃ of the third insulating surface 530 is greater than 3 mm, the second insulating surface 520 may protrude above the second terminal surface 402 and interfere with the bus bar 3.

The gasket 500 according to an embodiment may further include a support surface 540 that is spaced apart from the first insulating surface 510 and faces the electrode assembly 200.

The support surface 540 according to an embodiment may be a lower surface of the gasket 500, which is located on opposite sides of the first insulating surface 510, the second insulating surface 520, and the third insulating surface 530 and is disposed to face the inner space of the case 100. The support surface 540 may be disposed parallel to the first insulating surface 510 and the second insulating surface 520. The support surface 540 may be disposed to face the first and second insulating surfaces 510 and 520 in the first direction.

In an embodiment, a cross-sectional area of the gasket 500 may increase from the support surface 540 toward the first insulating surface 510. The first end portion 501 may have a form of an inclined surface disposed at an angle relative to the first direction, with both, or opposite, end portions connected to outer side end portions of the support surface 540 and the first insulating surface 510, respectively. Accordingly, the gasket 500 according to an embodiment may further increase the creepage distance L₁ of the first insulating surface 510.

The secondary battery 2 according to an embodiment may further include a rib 600.

The rib 600 may protrude from the cap plate 300 and support the support surface 540. The rib 600 may support the gasket 500 inside the terminal hole 350.

The rib 600 according to an embodiment may extend from the inner peripheral surface of the cap plate 300, which surrounds the terminal hole 350, toward the terminal hole 350. In an embodiment, the rib 600 may have a shape of a rectangular plate that partitions the terminal hole 350 vertically.

A pair of ribs 600 may be provided. The ribs 600 may extend individually from the inner peripheral surfaces of the cap plate 300, which surround different terminal holes 350.

The support surface 540 may be seated on an upper surface of the rib 600 inside the terminal hole 350. Accordingly, the rib 600 may prevent or substantially prevent the gasket 500 from being detached to the inside of the case 100.

A first rib hole 610 and a second rib hole 620 may be formed in the rib 600 according to an embodiment.

The first rib hole 610 may have the shape of a hole that passes through a central portion of the rib 600 in the first direction. A cross-sectional area of the first rib hole 610 may be greater than a cross-sectional area of each of the first boss 411b and the second boss 421b. The first boss 411b or the second boss 421b may pass through the first rib hole 610 and come into contact with the first terminal surface 401 of the terminal 400.

The second rib hole 620 may pass through the rib 600 in the first direction and may be spaced apart from the first rib hole 610. The second rib hole 620 may be disposed at a position spaced by a distance (e.g., a predetermined distance) in a radial direction of the first rib hole 610. A plurality of second rib holes 620 may be provided. The plurality of second rib holes 620 may be arranged in a circumferential direction about a central axis of the first rib hole 610.

The gasket 500 according to an embodiment may further include a fixing portion 550.

The fixing portion 550 may extend from the support surface 540, and may be disposed to surround the rib 600. Accordingly, the fixing portion 550 may strengthen a coupling force between the gasket 500 and the rib 600.

The fixing portion 550 according to an embodiment may extend downward from the support surface 540, i.e., in a direction opposite to the first direction. The fixing portion 550 may pass through the first rib hole 610 and the second rib hole 620, and may protrude downward from the rib 600. An end portion of the fixing portion 550 may be bent toward a lower surface of the rib 600, and may be in contact with and fixed to the lower surface of the rib 600. Accordingly, the fixing portion 550 may form a clamping force between the gasket 500 and the rib 600, thereby strengthening the coupling force between the gasket 500 and the rib 600.

Herein, a secondary battery 2 according to another embodiment of the present disclosure will be described.

The secondary battery 2 according to the present embodiment may be configured to be different from the secondary battery 2 according to an embodiment of the present disclosure described with reference to FIGS. 1 to 7 in a configuration of a gasket 500.

Accordingly, in describing the secondary battery 2 according to the present embodiment, only the configuration of the gasket 500, which is different from that in the secondary battery 2 according to the previously described embodiment of the present disclosure, will be described.

For the remaining components of the secondary battery 2 according to the present embodiment, the description of the secondary battery 2 according to the previously described embodiment of the present disclosure may be applied without modification.

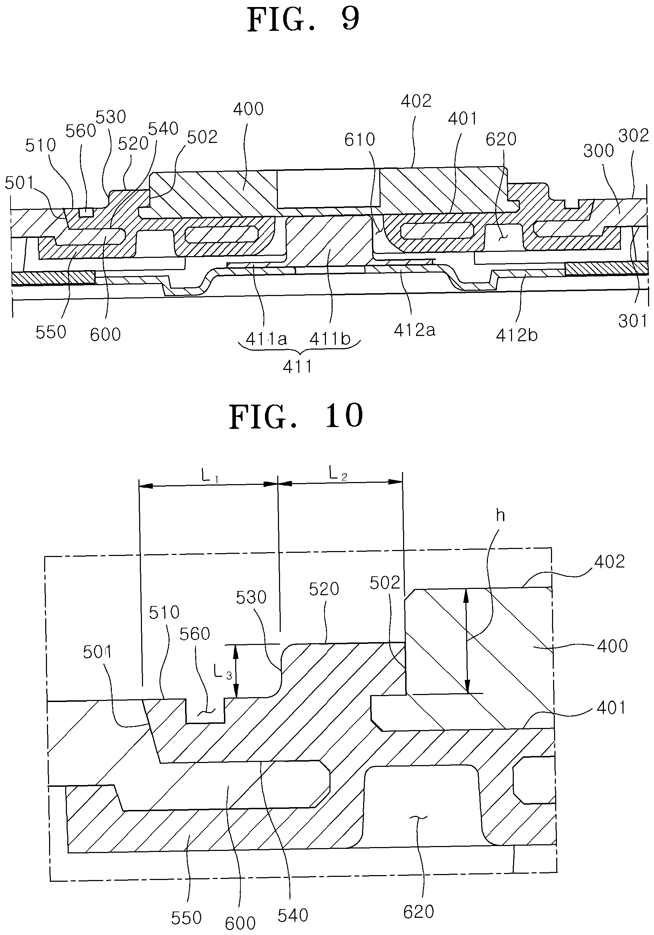

FIG. 8 is a perspective view schematically illustrating a configuration of the gasket according to another embodiment of the present disclosure; and FIG. 9 is a cross-sectional view schematically illustrating a configuration of the gasket according to another embodiment of the present disclosure.

Referring to FIGS. 8 and 9, the gasket 500 according to the present embodiment may further include a groove 560.

The groove 560 may be formed to be concave from at least one of the first insulating surface 510, the second insulating surface 520, and the third insulating surface 530. Accordingly, in the secondary battery 2 according to the present embodiment, the insulation performance of the gasket 500 may be further improved by increasing the creepage distance of the gasket 500 exposed to the outside of the cap plate 300 by a length of an inner peripheral surface of the groove 560.

FIG. 10 is an enlarged cross-sectional view schematically illustrating a configuration of the groove according to the present embodiment.

Referring to FIGS. 8 to 10, the groove 560 according to the present embodiment may have a shape of a groove that is concavely recessed from the first insulating surface 510 toward the support surface 540. A depth of the groove 560 may be varied in design as long as the depth is less than a distance between the first insulating surface 510 and the support surface 540. As an example, the depth of the groove 560 may be 1.2 mm.

The groove 560 may be formed to surround a peripheral surface of the terminal 400. As an example, the groove 560 may extend continuously to surround the peripheral surface of the terminal 400 with the terminal 400 as the center. Accordingly, the groove 560 may increase the creepage distance of the gasket 500 across the entire perimeter of the terminal 400.

The groove 560 has been described as being formed to be recessed into the first insulating surface 510, by way of example. However, the present disclosure is not limited thereto, and the groove 560 may be formed only on the second insulating surface 520 or the third insulating surface 530, or formed on any two or all of the first insulating surface 510, the second insulating surface 520, and the third insulating surface 530.

Herein, a secondary battery 2 according to another embodiment of the present disclosure will be described.

The secondary battery 2 according to the present embodiment may be configured to be different from the secondary battery 2 according to an embodiment of the present disclosure described with reference to FIGS. 1 to 7 and the secondary battery 2 according to another embodiment of the present disclosure described with reference to FIGS. 8 to 10 in a detailed configuration of a gasket 500.

Accordingly, in describing the secondary battery 2 according to the present embodiment, only the configuration of the gasket 500, which is different from that in the secondary battery 2 according to the embodiments described above, will be described.

For the remaining components of the secondary battery 2 according to the present embodiment, the description of the secondary battery 2 according to the embodiments of the present disclosure described above may be applied without modification.

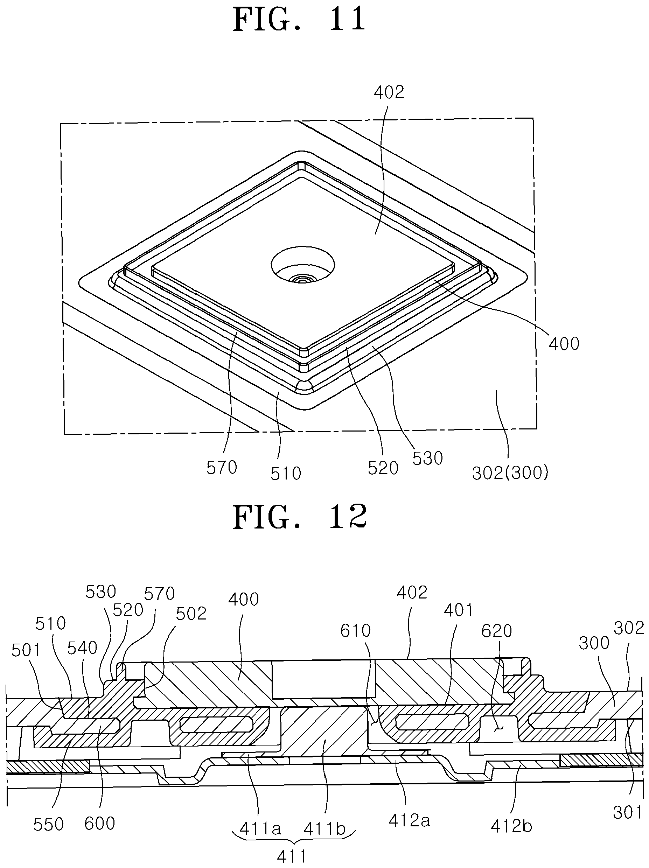

FIG. 11 is a perspective view schematically illustrating a configuration of a gasket according to another embodiment of the present disclosure; and FIG. 12 is a cross-sectional view schematically illustrating a configuration of the gasket of FIG. 11.

In FIGS. 11 and 12, a case in which the gasket 500 according to the present embodiment does not include the groove 560 is illustrated as an example, but the gasket 500 according to the present embodiment is not limited thereto, and may be configured to include the groove 560.

Referring to FIGS. 11 and 12, the gasket 500 according to the present embodiment may further include a filler 570.

The filler 570 may protrude from at least one of the first insulating surface 510, the second insulating surface 520, and the third insulating surface 530. Accordingly, in the secondary battery 2 according to the present embodiment, the insulation performance of the gasket 500 may be further improved by increasing the creepage distance of the gasket 500 exposed to the outside of the cap plate 300 by a length of an inner peripheral surface of the filler 570.

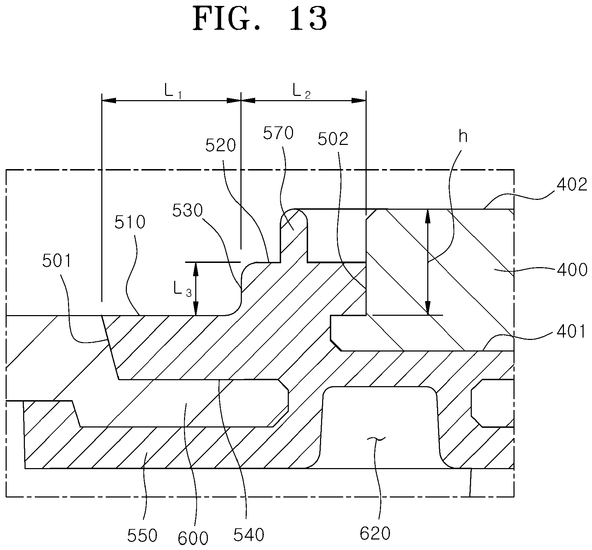

FIG. 13 is an enlarged view schematically illustrating a configuration of the filler of the gasket according to the present embodiment.

Referring to FIGS. 11 to 13, the filler 570 according to the present embodiment may have a form of a column protruding in the first direction from the second insulating surface 520.

An end portion of the filler 570 may be disposed to be lower than the second terminal surface 402 of the terminal 400. Accordingly, the filler 570 may prevent or substantially prevent interference with the bus bar 3 that is seated on the second terminal surface 402. As an example, a height of the filler 570 may be 1 mm.

The filler 570 may be formed to surround the peripheral surface of the terminal 400. As an example, the filler 570 may extend continuously to surround the peripheral surface of the terminal 400 with the terminal 400 as the center. Accordingly, the filler 570 may increase the creepage distance of the gasket 500 across the entire perimeter of the terminal 400.

The filler 570 has been described as protruding from the second insulating surface 520, by way of example. However, the present disclosure is not limited thereto, and the filler 570 may be formed only on the first insulating surface 510 or the third insulating surface 530, or formed on any two or all of the first insulating surface 510, the second insulating surface 520, and the third insulating surface 530.

According to embodiments of the present disclosure, internal insulation performance of a secondary battery can be improved by ensuring a sufficient insulation distance between a cap plate and a terminal.

However, aspects and effects obtainable through the present disclosure are not limited to the above aspects and effects, and other technical aspects and effects that are not mentioned will be clearly understood by those skilled in the art from the following description of the present disclosure.

While the present disclosure has been described with reference to some example embodiments shown in the drawings, these embodiments are merely illustrative and it is to be understood that various modifications and equivalent other embodiments can be derived by those skilled in the art on the basis of the embodiments.

## Claims

1. A secondary battery (2) comprising:
a case (100);
an electrode assembly (200) accommodated in the case (100);
a cap plate (300) comprising a first surface (301) facing the electrode assembly (200) and a second surface (302) opposite the first surface (301);
a terminal (400) protruding outward from the cap plate (300) and connected to the electrode assembly (200); and
a gasket (500) between the cap plate (300) and the terminal (400) and comprising a first end portion (501) in contact with the cap plate (300) and a second end portion (502) in contact with the terminal (400),
wherein a creepage distance of the gasket (500) is greater than a distance between the first end portion (501) and the second end portion (502).

2. The secondary battery (2) as claimed in claim 1, wherein the gasket (500) comprises:
a first insulating surface (510) extending toward the terminal (400) from the first end portion (501);
a second insulating surface (520) extending toward the cap plate (300) from the second end portion (502) and spaced apart from the first insulating surface (510); and
a third insulating surface (530) between the first insulating surface (510) and the second insulating surface (520).

3. The secondary battery (2) as claimed in claim 2, wherein the first insulating surface (510) and the second insulating surface (520) are parallel to the second surface (302).

4. The secondary battery (2) as claimed in claim 2 or 3, wherein the first insulating surface (510) and the second insulating surface (520) are on different planes.

5. The secondary battery (2) as claimed in claim **4,** wherein the second insulating surface (520) is higher than the first insulating surface (510).

6. The secondary battery (2) as claimed in claim 2 or 3, wherein the first insulating surface (510) and the second surface (302) are on a same plane.

7. The secondary battery (2) as claimed in claims 2 to 6, wherein the third insulating surface (530) intersects with the second surface (302).

8. The secondary battery (2) as claimed in claims 2 to 7, wherein the creepage distance of the gasket (500) is a sum of a creepage distance of the first insulating surface (510), a creepage distance of the second insulating surface (520), and a creepage distance of the third insulating surface (530).

9. The secondary battery (2) as claimed in claim 8, wherein the creepage distance of the gasket (500) is greater than or equal to 6 mm and less than or equal to 10 mm.

10. The secondary battery (2) as claimed in claims 2 to 9, wherein the gasket (500) further comprises a support surface (540) spaced apart from the first insulating surface (510) and facing the electrode assembly (200).

11. The secondary battery (2) as claimed in claim 10, further comprising a rib (600) protruding from the cap plate (300) and configured to support the support surface (540).

12. The secondary battery (2) as claimed in claims 2 to 11, wherein the gasket (500) further comprises a groove (560) that is concave from at least one of the first insulating surface (510), the second insulating surface (520), and the third insulating surface (530).

13. The secondary battery (2) as claimed in claims 2 to 12, wherein the gasket (500) further comprises a filler (570) protruding from at least one of the first insulating surface (510), the second insulating surface (520), and the third insulating surface (530) and/or wherein
the terminal (400) comprises a first terminal surface (401) facing the electrode assembly (200) and a second terminal surface (402) opposite to the first terminal surface (401), and
an end portion of the filler (570) is lower than the second terminal surface (402).

14. The secondary battery (2) as claimed in claims 1 to 13, wherein a vent hole (310) and a vent (320) are formed in the cap plate (300), wherein the vent (320) opens and closes in response to a change in an internal pressure of the case (100).

15. A battery pack comprising:
a housing (10); and
a plurality of secondary batteries accommodated in the housing (10),
wherein each of the secondary batteries comprises:
a case (100);
an electrode assembly (200) accommodated in the case (100);
a cap plate (300) comprising a first surface (301) facing the electrode assembly (200) and a second surface (302) opposite the first surface (301);
a terminal (400) passing through the cap plate (300) and connected to the electrode assembly (200); and
a gasket (500) between the cap plate (300) and the terminal (400) and comprising a first end portion (501) in contact with the cap plate (300) and a second end portion (502) in contact with the terminal (400),
wherein a creepage distance of the gasket (500) is greater than a separation distance between the first end portion (501) and the second end portion (502).
